# EUROPEAN PATENT APPLICATION

(11) **EP 3 427 804 A1**
(43) Date of publication of application: **16.01.2019**
(21) Application number: 18182600.9
(22) Date of filing: 10.07.2018
(51) Int. Cl.: B01D 35/30, B01D 36/00, B01D 29/15, B01D 29/21

(54) **LOW PROFILE RADIAL INDEXING WATER BOWL WITH INTEGRATED WIF/CONNECTOR**

(30) Priority: 10.07.2017 US 201762530370 P; 20.11.2017 US 201762588809 P; 02.07.2018 US 201816025545
(71) Applicant: Parker Hannifin Corp., Cleveland, OH 44124-4141 (US); Downs, Kevin B., Coventry, CT 06238 (US)
(72) Inventor: Downs, Kevin B., Coventry, CT Connecticut 06238 (US)
(74) Representative: Orr, Robert

(57) **Abstract**

Filter assemblies and filter systems are provided. The filter assemblies are releasably attachable to a filter head of the filter system. The filter assemblies include filter elements having filter media and bowl for collecting water removed from filtered fluid. The filter element includes helical ramps for securing the bowl to the filter element. The bowl has tabs that engage the ramps for pulling the bowl into engagement with the filter element. The ramps may include retaining portions to prevent opposite rotation and disengagement. The filter element may include a plurality of angularly spaced apart ramps that cooperate with the tabs allowing the bowl to be mounted to the filter element in a variety of different angular orientations to allow for varying the angular position of a connector of a sensor relative to the filter element.

## Description

### FIELD OF THE INVENTION

This invention generally relates to fluid filter systems fluid filters and particularly filtration systems and filters for fuel.

### BACKGROUND OF THE INVENTION

Filter systems for filtering fluids such as fuel are used to remove impurities from the fuel prior to the fuel being used by downstream systems. Impurities such as particulates or water within the fuel can cause damage to or inhibit proper operation of the downstream systems. For instance, particulates can plug fuel injectors or fuel lines while water can cause rusting and provide a lack of lubrication in the fuel system. As such, the filter systems are designed to remove the impurities to improve performance and reduce system failures.

Some filter systems include a replaceable filter element that removes the impurities. The filter element typically has filter media or components that remove the particulates and help separate the water from the fuel. The filter system may include a bowl (also referred to as a reservoir) that collects the water that is removed from the fuel as the fuel is filtered. The bowl may have a water-in-fuel sensor (WIF sensor) that determines when a predetermined level of water has been reached in the bowl. Once the water reaches the predetermined level, a signal can be sent to the operator that maintenance is needed. For example, the bowl may be drained and a new filter element may be installed.

The filter system is often located within an engine compartment. As such, it is desirable to make the filter system as small as possible. Further, a same filter system may be used in numerous different applications. As such, cables connected to the WIF sensor may be located differently depending on the particular application.

The present invention provides improvements over the current state of the art related to filter systems for fuel.

### BRIEF SUMMARY OF THE INVENTION

New and improved filter assemblies and systems for filtering fluid and particularly fuel are provided. More particularly, new and improved filter assemblies and filter systems for filtering particulates and water from fuel are provided.

According to a first aspect of the present invention, there is provided a filter assembly as claimed in claim 1.

One filter assembly includes a filter element, a bowl and a water-in-fuel sensor. The filter element includes an outer shell and a ring of filter media positioned within the outer shell. The outer shell includes a predetermined number of helical ramps equally angularly spaced apart about a central axis. The bowl includes a sidewall received within the outer shell including at least one tab which can ride up the helical ramps to pull the bowl into the outer shell as the bowl is rotated relative to the outer shell about the central axis. The tab is selectively engageable with each of the helical ramps such that the bowl may be mounted to the outer shell in a number of various different angular orientations equal to the predetermined number of helical ramps. The water-in-fuel sensor is carried by the bowl for sensing an amount of water in the bowl. The water-in-fuel sensor has a connector that is radially offset from the central axis such that changing the helical ramp that the tab engages changes the angular orientation of the connector relative to the filter element and central axis.

The connector may be integrally molded with the sidewall of the bowl.

The water-in-fuel sensor may include an electrode that is molded into the bowl.

The bowl may include an equal number of tabs as the predetermined number of helical ramps.

The ring of filter media may be part of a filter cartridge that is received within the outer shell. The helical ramps may be formed in an annular base plate of the outer shell that forms an open end of the outer shell through which the filter cartridge is received into the outer shell.

The filter cartridge may be removably mounted within the outer shell such that the filter cartridge may be replaced when the filter media is spent.

The connector may define a radially directed opening for receiving a mating connector therein in a radially oriented direction.

Each helical ramp may include a retaining portion at an inner distal end and a mouth at an opposite end as the retaining portion. A spring may be located between the bowl and the outer shell maintaining the tab in the retaining portion.

Each helical ramp may include: a tapered region and a negative ramp region. The tapered region may extend from the mouth towards the retaining portion, the tapered region tapered in a first direction. The negative ramp region may be between an end of the tapered region and the retaining portion. The negative ramp region may be tapered in a second direction opposite the first direction.

The negative ramp region and tapered region may form an axially extending hump adjacent the retaining portion. The axially extending hump may form an angular abutment inhibiting removal of the tab from the retaining portion without first compressing the spring.

According to a second aspect of the present invention, there is provided a filter assembly as claimed in claim 9.

Another filter assembly includes an element, a bowl and a compression spring. The element includes a ring of filter media circumscribing a central axis and an annular base plate at an end of the media ring including one or more helical ramps on a surface of the base plate. Each ramp includes an inner distal end with a retaining portion. The bowl includes a sidewall closely received within the base plate and including one or more tabs. The one or more tabs can ride up the one or more ramps to pull the bowl against the base plate when rotated until the tabs are located within the retaining portion. The compression spring is located between the bowl and the plate and maintains each tab in a corresponding retaining portion.

Each ramp may include a mouth and a tapered region extending from the mouth toward the retaining portion. The retaining portion may be recessed relative to an end of the tapered region opposite the mouth such that an axially extending abutment is formed inhibiting removal of the tab from the retaining portion by angularly rotating the bowl without axially displacing the bowl axially further into the base plate.

Each ramp may further include a negative ramp region between the retaining portion and the tapered region. The negative ramp region may have a taper in an opposite direction as a taper of the tapered region forming the axially extending abutment.

Rotation of the bowl relative to the base plate to remove the tab from the retaining portion may draw the bowl axially further into the base plate and may compress the spring as the tab traverses the axially extending abutment, optionally due to the negative ramp region.

The spring may be located axially between a distal end of the sidewall of the bowl and radially projecting and axially facing surfaces of the element.

The annular base plate may be formed as part of an outer shell in which the ring of filter media is mounted.

The axially facing surfaces of the element may be provided by an annular sidewall of the outer shell.

A water-in-fuel sensor may be carried by the bowl. The water-in-fuel sensor may have a connector radially offset from a central axis about which the bowl rotates as the bowl is connected or disconnected from the base plate.

The connector may define an opening that receives a mating connector in a radial direction, the connector being molded directing into the bowl.

Optionally, the spring must be compressed to remove the tab from the retaining portion.

Filter systems incorporating any of the filter assemblies above are provided. The filter system will additionally include a filter head to which the filter assembly may be releasably attached. The filter head and filter assembly will have sealing interfaces therebetween to prevent leakage as well as to prevent contamination of clean fuel from unfiltered dirty fuel.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is an isometric illustration of a filter system according to an embodiment of the present invention;
FIG. 2 is a partial exploded illustration of the filter system of FIG. 1;
FIG. 3 is a cross-sectional illustration of the filter system of FIG. 1;
FIG. 4 is an exploded illustration of the filter element of the filter system of FIG. 1;
FIG. 5 is an exploded, cross-sectional illustration of the filter element of FIG. 4;
FIG. 6 is an assembly illustration of the water bowl and outer shell of the filter element of FIG. 4;
FIG. 7 is an enlarged cross-sectional illustration of the outer shell of the filter element of FIG. 4 illustrating a helical ramp thereof;
FIG. 8 is an assembled cross-sectional illustration of the water bowl attached to the outer shell of the filter element of FIG. 4; and
FIG. 9 is a cross-sectional illustration of the filter element illustrating the engagement of the tab of the water bowl with the retaining portion of the outer shell.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

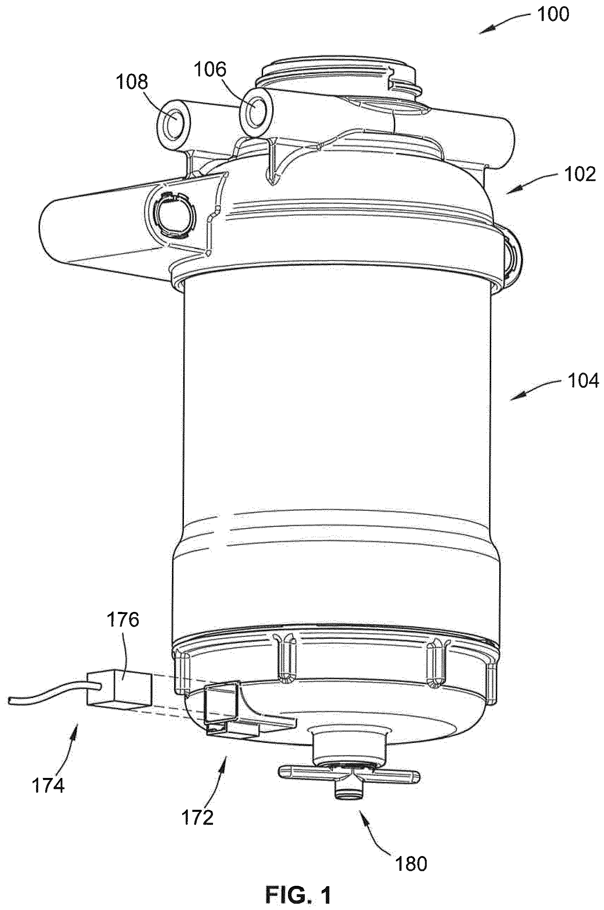

A filter system 100 for filtering fluid and particularly fuel is illustrated in FIG. 1. The filter system 100 includes a filter head 102 and a filter assembly 104 that releasably attaches to the filter head 102. The filter system 100 finds particular use in removing impurities including particulates and water from fuel prior to being supplied to downstream systems such as an engine and particularly a fuel supply system of the engine

The filter head 102 includes an inlet 106 through which dirty fluid enters the filter system 100 and an outlet 108 through which clean fluid exits the filter system 100. The inlet 106 and outlet 108 are configured to mate with hoses that carry the fluid to and away from the filter system 100. The orientation and location of the inlet 106 and outlet 108 can change depending on the particular implementation. Further, the inlet 106 and outlet 108 can have openings in multiple locations to allow for use in differing installations.

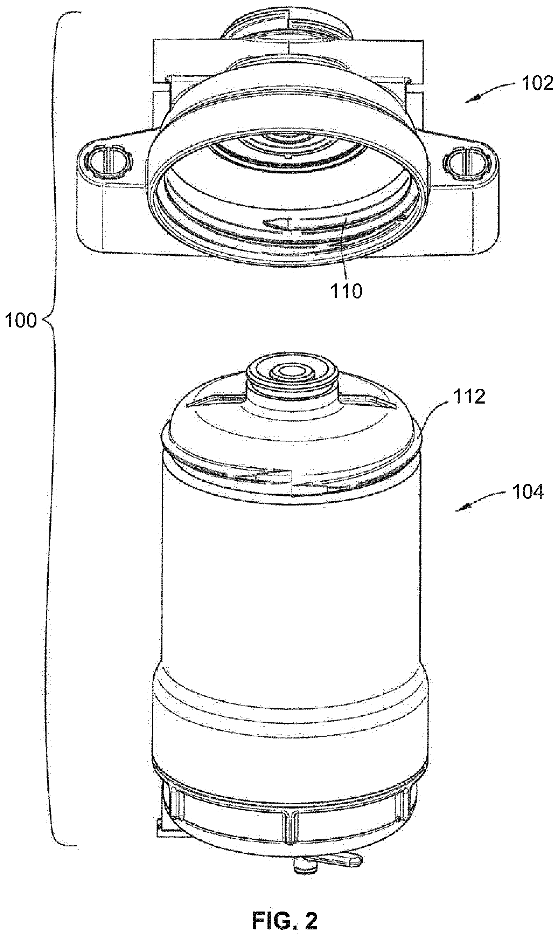

With reference to FIG. 2, the filter head 102 and filter assembly 104 have cooperating threading 110, 112 to releasably secure the filter assembly 104 to the filter head 102. Appropriate mating structure is provided that allows for sealing connection of the filter assembly 104 to the filter head 102 such that the inlet 106 is in fluid communication with a dirty side of the filter assembly 104 and the outlet 108 is in fluid communication with a clean side of the filter assembly 104.

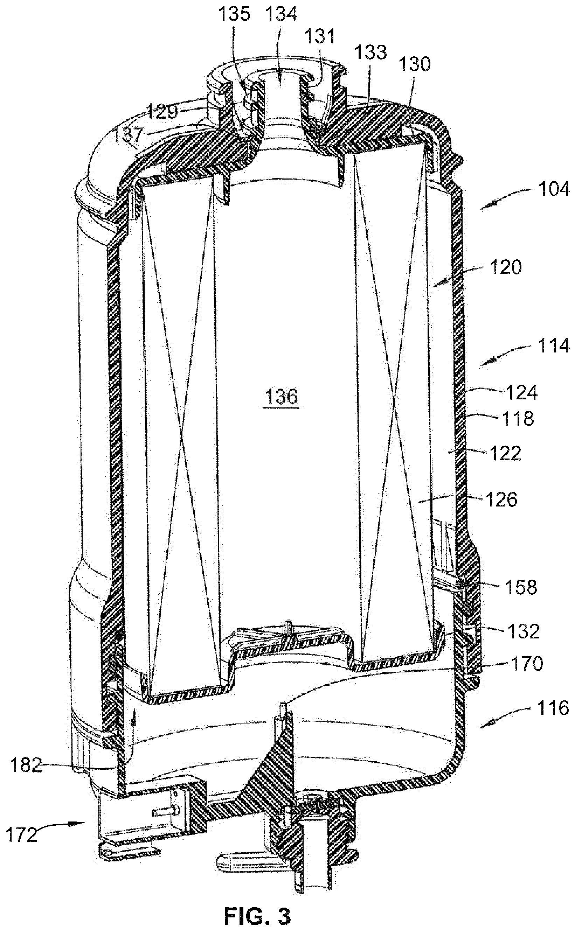

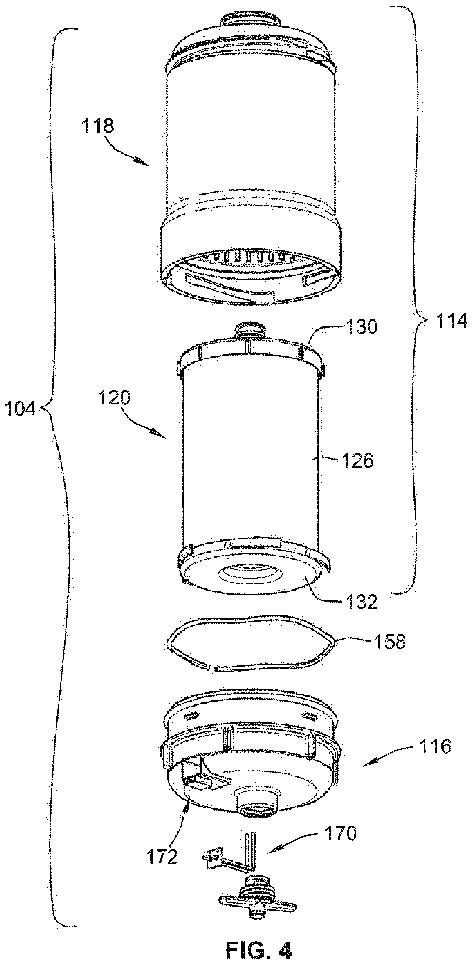

With reference to FIGS. 3-5, the filter assembly 104 includes a filter element 114 and a water bowl 116. The water bowl 116 is releasably attached to the filter element 114. The water bowl 116 collects water that is removed from the fuel as the fuel passes through the filter element 114 and filtered.

The filter element 114 includes an outer shell 118 and a filter cartridge 120. The filter element 114 may be disposable in its entirety or components thereof may be reusable, such as for example the outer shell 118. In a particular embodiment, the filter cartridge 120 is replaceable and the outer shell 118 is reusable. As such, the filter cartridge 120 is removably attached to the outer shell 118 within a central cavity 122 defined by an annular sidewall 124 of the outer shell 118.

The filter cartridge 120 includes a ring of filter media 126 for filtering the fuel. The ring of filter media circumscribes a central axis. The ring of filter media 126 could be formed from any filter media. The filter media 126, for example, could be pleated filter media, sintered wire mesh, or any other suitable filter media. In the illustrated embodiment, the filter media is used to remove both particulates and to strip water from fuel. However, in other embodiments, other components can be provided to aid in stripping water and/or removing particulates.

The filter cartridge 120 includes first and second end caps 130, 132 at opposed axial ends of the filter media 126. The first end cap 130 is an annular end cap 130 includes an axially extending nipple 131 that defines a central opening 134 that communicates with a central volume 136 of the ring of filter media 126. Filtered fuel will exit the filter cartridge 120 through the central opening 134 provided by nipple 131. A gasket may be carried by the first end cap 130, and particularly nipple 131, for sealing with the filter head 102. The gasket could be an o-ring, felt gasket, etc. In the illustrated embodiment, the gasket would be carried in groove 135.

The nipple 131 has a second groove that can carry a retainer, such as snap ring 137 that will axially engage an intermittent abutment in the form of an intermittent ledges defined by angularly spaced apart projections 133 proximate nipple 129 of outer shell 118 to mechanically secure the filter cartridge 120 within the outer shell 118. When assembled, nipple 131 is axially located within the cavity defined by nipple 129. Outer nipple 129 of the outer shell 118 includes a groove for carrying a second gasket for sealing with the filter head In some implementations the snap ring 137 would secure the filter cartridge 120 to the outer shell 118 such that the two components are locked to one another as a unit such that the filter cartridge 120 and outer shell 118 are disposed of as a unit when filter media 126 is spent. In alternative embodiments, the nipple 131 can include a radially extending projection that has an outer diameter that is larger than an inner diameter defined by the ends of projections 133. A taper can be provided on the projections 133 to assist in assembly and particularly axially passing the snap ring or radial projection axially past the projections 133.

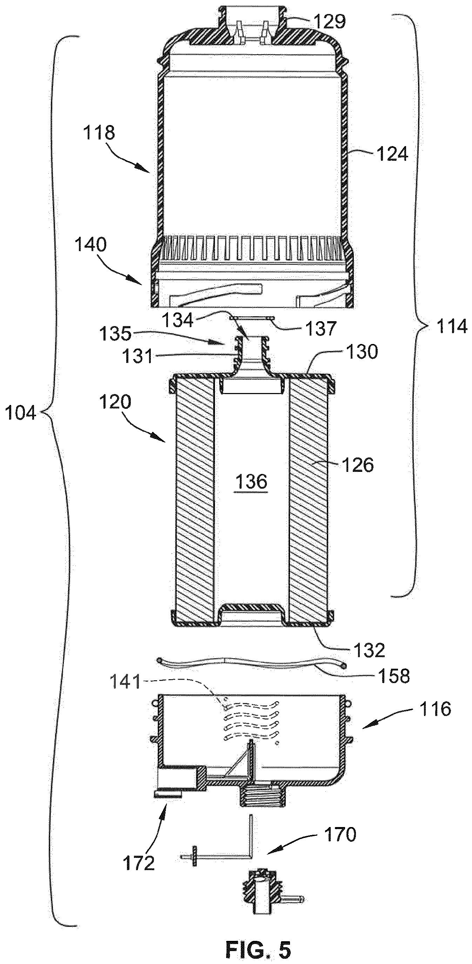

An alternative assembly may reuse outer shell 118 while the cartridge 120 is replaced at maintenance intervals. In one such arrangement, a biasing member 141 illustrated in dashed lines in FIG. 5, such as a wave spring or coil spring can be positioned between the second end cap 132 and the bowl 116. The biasing member 141 will provide a biasing force to retain the cartridge 120 in its proper axial position relative to outer shell 118. Further any such force can be used to help secure the engagement between the bowl 116 and outer shell 118 as will be described in more detail below.

The second end cap 132 is an imperforate end cap that prevents fluid flow therethrough. The second end cap 132 closes the opposite end of the filter cartridge 120 forcing the fuel to flow through the ring of filter media 126 such that it is filtered.

The end caps 130, 132 may be formed from plastic material and operably secured to the opposed ends of the filter media 126. For example, the end caps 130, 132 may be molded and then adhesively secured to the ring of filter media 126. Alternatively, the ring of filter media 126 may be embedded into preformed end caps 130, 132. Further yet, the end caps may be molded directly to the ends of the filter media 126.

The filter element 114, and particularly the outer shell 118 is configured to releasably engage the water bowl 116. More particularly, in an embodiment, the lower region of the outer shell 118 that forms an opening through which the filter cartridge may be installed and removed at service intervals defines an annular base plate 140 to which the water bowl 116 releasably attaches. The base plate 140 is positioned adjacent an end of the ring of filter media 126.

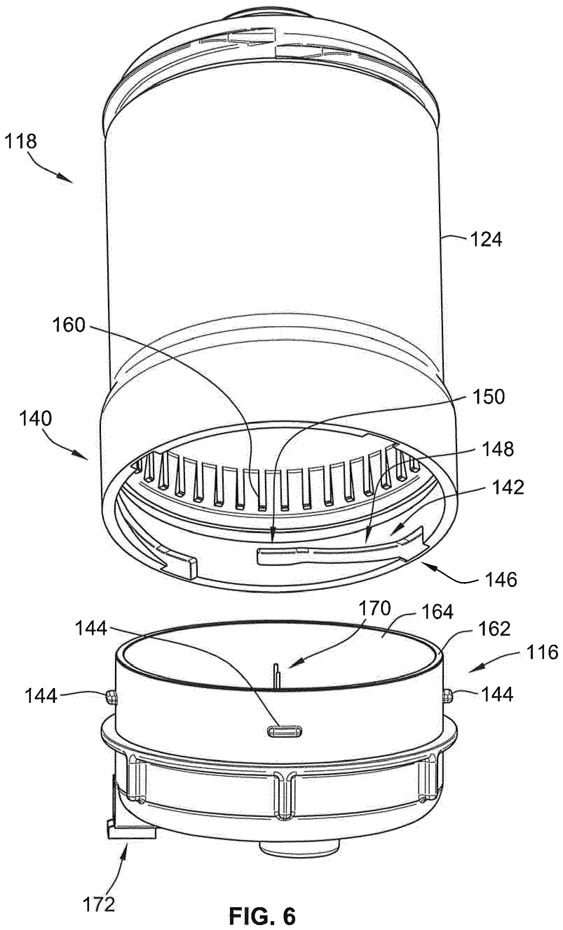

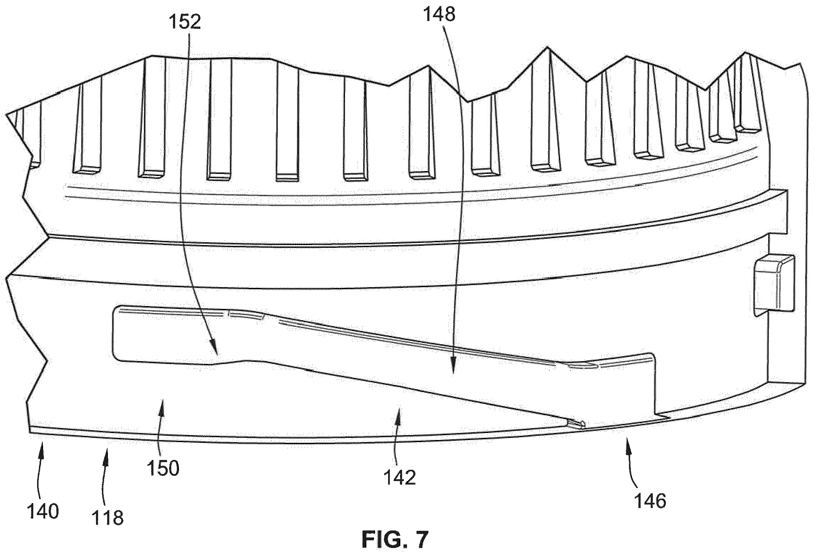

With additional reference to FIGS. 6 and 7, the base plate 140 forms a distal end of the sidewall 124 and includes a plurality of helical ramps 142 formed in a radially inner surface of sidewall 124. The helical ramps 142 cooperate with radially projecting tabs 144 of the water bowl 116 to selectively secure the water bowl 116 and outer shell 118 to one another.

Each helical ramp 142 includes a mouth 146 through which the tab 144 is received into the helical ramp 142. The mouths 146 of the helical ramps 142 extend through an axial end of the outer shell 118. Each helical ramp includes a tapered region 148 extending from the mouth against which the tab 144 axially rides to axially transition the water bowl 116 relative to the outer shell 118. When the water bowl 116 is rotated in a first direction, the tapered region 148 will act on tab 144 and draw the water bowl 116 axially into the outer shell 118. When the water bowl 116 is rotated in an opposite second direction, the tapered region 148 will act on tab 144 and push the water bowl 116 axially out of the outer shell 118.

Proximate an opposite end of the helical ramp 142 from mouth 146, each helical ramp 142 includes a retaining portion 150. The retaining portion 150 forms an axially recess proximate an end of the tapered region 148 for inhibiting rotation of the water bowl 116 relative to the outer shell 118 when tab 144 is received therein. A negative ramp region 152 transitions from the tapered region 148 to the retaining portion 150. The negative ramp region 152 and tapered region 148 form an angular abutment in the form of an axial hump portion in the helical ramp 142 that inhibits twisting of the water bowl 116 relative to the outer shell 118 when the tab 144 is received therein. The negative ramp region 152 has an opposite taper as compared to the tapered region 148. The negative ramp region 152 is preferably not perpendicular to an angular motion of the tab as the water bowl 116 is rotated to remove the water bowl 116 from outer shell 118.

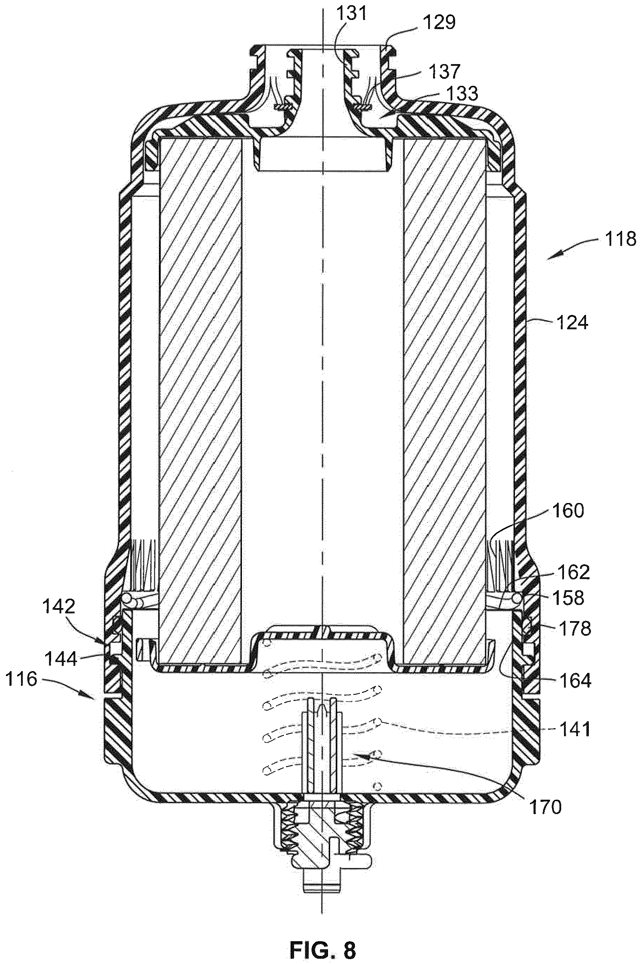

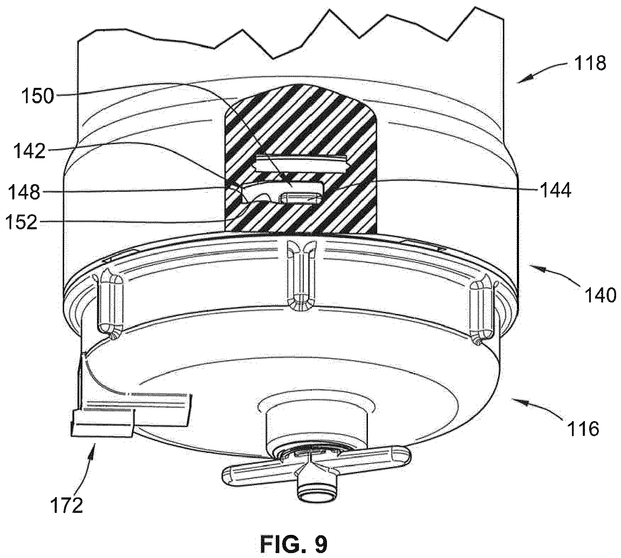

A spring 158 (see e.g. FIG. 8) operates between the outer shell 118 and the water bowl 116 to axially bias the water bowl 116 away from the outer shell 118. This forces the tab 144 toward a bottom of the retaining portion 150 (see e.g. FIG. 9). Further, for the water bowl 116 rotate in a motion for removing the water bowl 116 from the outer shell 118, the tab 144 must ride up negative ramp region 152 drawing the water bowl 116 axially further into the outer shell 118 against a force provided by spring 158 biasing the water bowl 116 out of the outer shell 118. The negative ramp region 152 also provides user feedback that the water bowl 116 has been properly mounted to outer shell 118. Alternatively, with reference to FIGS. 5 and 6, the optional arrangement with biasing member 141 discussed above for securing the cartridge 120 in the appropriate axial position relative to outer shell 120 can be used to provide the axial force used to maintain tab 144 within retaining portion 150.

To remove the water bowl 116, the user will initially push the water bowl 116 axially into the outer shell 118. This will assist in or fully compress spring 158 or biasing member 141 and allow the tab 144 to pass the negative ramp region 152.

In the illustrated embodiment, the spring is compressed between axially facing distal ends of axially abutments 160 formed in an inner surface of sidewall 124 and a distal end 162 of a sidewall 164 of the water bowl 116. However, other axial abutment arrangements can be provided to provide the force required to properly bias the water bowl 116 to maintain securement of the tab 144 in the retaining portion 150.

As illustrated in FIG. 6, the illustrated embodiment includes four helical ramps 142 (the mouths of two helical ramps are shown) angularly spaced about the base plate 140 and the water bowl 116 has four corresponding tabs 144 (only 3 illustrated). In this embodiment, the helical ramps 142 are equally angularly spaced apart (e.g. 90 degrees) and the tabs 144 are similarly equally angularly spaced apart (e.g. 90 degrees). The helical ramps 142 are identical and the tabs 144 are identical. As such, any tab 144 can cooperate with any of the helical ramps 142. As such, the water bowl 116 can have four different angular orientations relative to the outer shell 118. This feature is highly beneficial as it relates to mounting the filter system 100 within differently configured engine compartments or other tight spaces.

More particularly, with reference to FIGS. 1 and 3, filter system 100 includes a water-in-fuel sensor 170 ("WIF sensor 170"), see FIG. 3, that monitors the amount of water that has collected within water bowl 116. The WIF sensor 170 is in the form of one or more electrodes that extends into the open volume of the water bowl 116. However, the WIF sensor 170 includes a connector 172 formed in the water bowl 116. More particularly, the electrode is molded into the water bowl 116 as well as the connector 172 to which a wire 174 with a corresponding connector 176 may be connected (see e.g. FIG. 1) to connect the WIF sensor 170 to a monitor or computer that controls the engine or other device.

However, depending on the configuration of the engine compartment or location of mounting the filter system 100, the wire 174 may be in a different location relative to mounting structure for mounting the filter system 100. By allowing the water bowl 116 to mount in different angular orientations relative to the filter element 114 and particularly outer shell 118, the user will be better able to properly orient the water bowl 116 to connect with wire 174. Thus, the instant embodiment allows for increased flexibility in mounting the filter system 100. Thus, a single water bowl 116 or outer shell 118 configuration can be manufactured while the customer can properly orient the opening of connector 172 to cooperate with connector 176 of wire 174. The opening of connector 172 is radially directed such that mating connector 176 of wire 174 is received into and removed from connector 172 in a radial direction relative to a central axis of the filter assembly.

A seal member 178 is positioned between the water bowl 116 and the outer shell 118 to prevent leakage. The seal member 178 may be in the form of a rubber O-ring.

A drain 180 is provided in a bottom of the water bowl 116 to allow for selectively draining collected water.

With reference to FIG. 3, a gap 182 formed between the filter cartridge 120 and the outer shell 118 provides an unobstructed flow path for stripped water to enter the water bowl 116. More particularly, water can be stripped by the outer surface of the filter media 126 and then drain down into water bowl 116 through gap 182.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filter assembly comprising:
a filter element including an outer shell and a ring of filter media positioned within the outer shell, the outer shell including a predetermined number of helical ramps equally angularly spaced apart about a central axis;
a bowl including a sidewall received within the outer shell including at least one tab which can ride up the helical ramps to pull the bowl into the outer shell as the bowl is rotated relative to the outer shell about the central axis, the tab being selectively engageable with each of the helical ramps such that the bowl may be mounted to the outer shell in a number of various different angular orientations equal to the predetermined number of helical ramps; and
a water-in-fuel sensor carried by the bowl for sensing an amount of water in the bowl, the water-in-fuel sensor having a connector that is radially offset from the central axis such that changing the helical ramp that the tab engages changes the angular orientation of the connector relative to the filter element.

2. The filter assembly of claim 1, wherein the connector is integrally molded with the sidewall of the bowl.

3. The filter assembly of claim 2, wherein the water-in-fuel sensor includes an electrode that is molded into the bowl.

4. The filter assembly of any preceding claim, wherein the ring of filter media is part of a filter cartridge that is received within the outer shell;
wherein the helical ramps are formed in an annular base plate of the outer shell that forms an open end of the outer shell through which the filter cartridge is received into the outer shell.

5. The filter assembly of claim 4, wherein the filter cartridge is removably mounted within the outer shell such that the filter cartridge may be replaced when the filter media is spent.

6. The filter assembly of claim 2, or any of claims 3 to 5 when dependent on claim 2, wherein the connector defines a radially directed opening for receiving a mating connector therein in a radially oriented direction.

7. The filter assembly of any preceding claim, wherein each helical ramp includes a retaining portion at an inner distal end and a mouth at an opposite end as the retaining portion;
further comprising a spring located between the bowl and the outer shell maintaining the tab in a retaining portion.

8. The filter assembly of claim 7, wherein each helical ramp includes:
a tapered region extending from the mouth towards the retaining portion, the tapered region tapered in a first direction; and
a negative ramp region between an end of the tapered region and the retaining portion, the negative ramp region being tapered in a second direction opposite the first direction;
wherein the negative ramp region and tapered region form an axially extending hump adjacent the retaining portion forming an angular abutment inhibiting removal of the tab from the retaining portion without first compressing the spring.

9. A filter assembly comprising:
an element including a ring of filter media circumscribing a central axis, and an annular base plate at an end of the media ring including one or more helical ramps on a surface of the base plate, each ramp including an inner distal end with a retaining portion;
a bowl including a sidewall closely received within the base plate and including one or more tabs which can ride up the one or more ramps to pull the bowl against the base plate when rotated until the tabs are located within the retaining portion; and
a compression spring located between the bowl and the plate and maintaining each tab in a corresponding retaining portion.

10. The filter assembly of claim 9, wherein each ramp includes a mouth and a tapered region extending from the mouth toward the retaining portion, the retaining portion being recessed relative to an end of the tapered region opposite the mouth such that an axially extending abutment is formed inhibiting removal of the tab from the retaining portion by angularly rotating the bowl without axially displacing the bowl axially further into the base plate.

11. The filter assembly of claim 10, wherein each ramp further includes a negative ramp region between the retaining portion and the tapered region, the negative ramp region having a taper in an opposite direction as a taper of the tapered region forming the axially extending abutment.

12. The filter assembly of claim 11, wherein rotation of the bowl relative to the base plate to remove the tab from the retaining portion draws the bowl axially further into the base plate and compresses the spring as the tab traverses the axially extending abutment.

13. The filter assembly of claim 12, wherein the spring is located axially between a distal end of the sidewall of the bowl and radially projecting and axially facing surfaces of the element.

14. The filter assembly of claim 13, wherein the annular base plate is formed as part of an outer shell in which the ring of filter media is mounted.

15. The filter assembly of any one of claims 9 to 14, further comprising a water-in-fuel sensor carried by the bowl having a connector radially offset from a central axis about which the bowl rotates as the bowl is connected or disconnected from the base plate.
